# EUROPÄISCHE PATENTSCHRIFT

(11) **EP 3 029 010 B1**
(45) Veröffentlichungstag und Bekanntmachung des Hinweises auf die Patenterteilung: **08.03.2017**
(21) Anmeldenummer: 14195619.3
(22) Anmeldetag: 01.12.2014
(51) Int. Cl.: C05F 7/02, C05C 11/00, C05G 3/00

(54) **VERFAHREN ZUM HERSTELLEN EINES DÜNGEMITTELS AUS SCHWARZLAUGE**
METHOD FOR PRODUCING A FERTILIZER FROM BLACK LIQUOURS
PROCÉDÉ DE FABRICATION D'UN FERTILISANT À PARTIR DE LIQUEUR NOIRE

(43) Veröffentlichungstag der Anmeldung: 08.06.2016
(73) Patentinhaber: S2P AG Straw - Pulp & Paper, 6055 Alpnach Dorf (CH)
(72) Erfinder: Hörnlein, Karl-Heinz, 8834 Schindellegi (CH)
(74) Vertreter: Wunderlich, Rainer

(56) Entgegenhaltungen:
- WO-A1-2010/115488
- GB-A- 1 255 940
- US-A- 4 018 591
- US-A1- 2013 233 037
- DATABASE WPI Week 198312 Thomson Scientific, London, GB; AN 1983-28370K XP002739326, -& JP S58 23726 A (ENOMOTO T) 12. Februar 1983 (1983-02-12)

## Beschreibung

Die Erfindung betrifft ein Verfahren zum Herstellen eines stickstoffhaltigen Düngemittels aus flüssiger Schwarzlauge gemäß Anspruch 1.

Aus der WO 2010/115488 ist ein gattungsgemäßes Verfahren zur Gewinnung von Zellstoff durch Abtrennen von Lignin aus einer lignozellulosehaltiger Biomasse in Form von Pflanzen bzw. Pflanzenteilen bekannt. Hierbei wird die lignozellulosehaltige Biomasse unter Verwendung von Alkanolamin aufgeschlossen und gebleicht, wobei Schwarzlauge mit gelöstem Lignin von dem Rohzellstoff abgetrennt wird. Der Schwarzlauge wird Alkanolamin und Wasser entzogen, wobei die Feststoffrückstände als Papier-, Energie-, Chemie- oder Düngerrohstoff dienen können.

Als Biopolymerquelle kann erfindungsgemäß Schwarzlauge verwendet werden. Schwarzlauge ist ein energie- und ligninreiches Verfahrensprodukt, welches als ein Abfallstoff etwa bei der Celluloseherstellung in der Papierindustrie in großen Mengen anfällt. Sie entsteht bei der Trennung des Lignins vom Zellstoff. Die Entsorgung großer Mengen an Schwarzlauge ist aufwändig. Es wurden bereits verschiedene Bemühungen unternommen, Schwarzlauge sinnvoll und wirtschaftlich zu verwerten. Es ist grundsätzlich bekannt, dass Schwarzlauge stickstoffhaltig ist, was insbesondre für eine Düngemittelherstellung von Interesse ist. Aufgrund einer Belastung mit ätzenden und aggressiven Bestandteilen, wird für gewöhnlich die Schwarzlauge der Verbrennung zur Energiegewinnung zugeführt.

Der Erfindung liegt die **Aufgabe** zugrunde, ein wirtschaftliches Verfahren zum Herstellen eines stickstoffhaltigen Düngemittels aus flüssiger Schwarzlauge anzugeben, welches hohen qualitativen Erfordernissen gerecht wird.

Die Aufgabe wird nach der Erfindung durch ein Verfahren mit den Merkmalen des Anspruchs 1 gelöst. Bevorzugte Ausführungsformen sind in den jeweils abhängigen Ansprüchen angegeben.

Das erfindungsgemäße Verfahren ist dadurch gekennzeichnet, dass aus der flüssigen Schwarzlauge mindestens ein Schadstoff entfernt wird, die Schwarzlauge auf Raumtemperatur abgekühlt und mit Wasser vermengt wird, wobei ein definierter fließfähiger Zustand der Schwarzlauge eingestellt wird, die fließfähige Schwarzlauge einer Mischvorrichtung zugeführt und mit pulverförmigen Feststoffen zu einer pastösen Mischung vermengt wird, und die Mischung zu Granulatkörnern geformt wird.

Ein Grundgedanke der Erfindung liegt darin, für die Herstellung eines stickstoffhaltigen Düngemittels Schwarzlauge zu dekontaminieren und als Feststoff zur Verfügung zu stellen. Die Dekontamination der Schwarzlauge wird nach einem Aspekt der Erfindung dadurch erreicht, dass freie, ungebundene Chemikalien beispielsweise aus dem Herstellungsprozess der Schwarzlauge, insbesondere Monoethanolamin, abgetrennt werden. So lässt sich eine Schwarzlauge erhalten, der für Gesundheit und Umwelt bedenkliche Chemikalien entzogen wurden. Eine solche Schwarzlauge ist weitgehend frei von zumindest Alkanolaminen, vorzugsweise Monoethanolamin.

Um die gewonnene Schwarzlauge in wirtschaftlicher Weise handhabbar und nutzbar zu machen, ist es nach einem weiteren Aspekt der Erfindung vorgesehen, dass die Schwarzlauge durch Zugabe von pulverförmigen Feststoffen, Lösemitteln und Hilfsstoffen, mittels einer Mischeinrichtung zu einer pastösen Mischung vermengt wird, wodurch das Formen von Granulatkörnern ermöglicht wird.

Erfindungsgemäß ist als flüssige Schwarzlauge eine ligninhaltige Mischung von verschiedenen Stoffen zu verstehen. Die Schwarzlauge kann aus lignocellulose-haltiger Biomasse gewonnen werden, aus welcher der Ligninanteil zusammen mit anderen Stoffen von den schwer löslichen Cellulose- und Hemicellulosebestandteilen der Pflanzenrohstoffe abgetrennt wird. Die flüssige Schwarzlauge kann demnach auch Stoffe aus dem Herstellungsverfahren der Schwarzlauge sowie weitere Stoffe aus den Pflanzenbestandteilen umfassen. Die enthaltenen Stoffe sind nicht auf die im Herstellungsprozess zugeführten Stoffe beschränkt, sondern schließen auch solche Stoffe ein, welche erst durch den Herstellungsprozess der Schwarzlauge entstehen.

Für das erfindungsgemäße Verfahren wird vorzugsweise Schwarzlauge verwendet, welches bei einem Alkanolamin-Verfahren zur Celluloseherstellung anfällt. Nach einer Erkenntnis der Erfindung ist diese Schwarzlauge besonders stickstoffhaltig und geringer belastet.

Die flüssige Schwarzlauge kann auch solche Stoffe umfassen, welche die Viskosität der flüssigen Schwarzlauge beeinflussen können. Dabei handelt es sich insbesondere um mindestens ein freies Alkanolamin, vorzugsweise um freies Monoethanolamin.

Eine bevorzugte Weiterbildung der Erfindung kann darin bestehen, dass ein Alkanolamin als Schadstoff, insbesondere ein Alkanolamin mit eins bis vier Kohlenstoffatomen, vorzugsweise Monoethanolamin, Monopropanolamin, Monobutanolamin und/oder Diglycolamin entfernt wird. Es können sowohl Alkanolamine mit verzweigten wie unverzweigten Kohlenstoffketten eingesetzt werden. Besonders bevorzugt ist es nach einer Weiterbildung der Erfindung, dass als Alkanolamin Monoethanolamin eingesetzt wird. Insbesondere Alkanolamine mit einer kurzen Kohlenstoffkettenlänge weisen vorteilhafte Eigenschaften beim Bilden der Schwarzlauge aus lignocellulose-haltiger Biomasse auf. Diese kurzkettigen Alkanolamine lassen sich in besonders einfacher Weise im Anschluss an die Schwarzlaugenbildung von dieser wieder abtrennen.

Eine vorteilhafte Ausführung der Erfindung besteht darin, dass freies Alkanolamin, vorzugsweise Monoethanolamin, durch Fällung mit anschließender Filtration, Zentrifugation oder Pressen aus der Schwarzlauge entfernt wird.

Eine zweckmäßige Weiterbildung der Erfindung wird dadurch erreicht, dass die Schwarzlauge stickstoffhaltig ist, insbesondere mit einem Anteil an mindestens einem gebundenen Alkanolamin, vorzugsweise Monoethanolamin gebildet wird. Ein Stickstoffgehalt der Schwarzlauge kann beispielsweise dadurch erreicht werden, dass in der Schwarzlauge gebundene stickstoffhaltige Verbindungen, insbesondere Alkanolamine, vorliegen. Diese können insbesondere an einen Ligninanteil gebunden sein. Gebunde stickstoffhaltige Verbindungen, insbesondere gebundenes Alkanolamin weist nicht dieselben ätzenden beziehungsweise umweltschädlichen sowie toxischen Eigenschaften auf wie dieselben Verbindungen in freier, ungebundener Form. Durch die Bildung der Schwarzlauge mit einem Stickstoffanteil, welcher an die Schwarzlauge gebunden ist, wird eine verzögerte Freisetzung stickstoffhaltiger Verbindungen im Rahmen einer mikrobiellen Zersetzung oder Verwitterung der Schwarzlauge gewährleistet. Somit kann eine solche Schwarzlauge, welche beispielsweise gebundenes Alkanolamin, insbesondere Monoethanolamin aufweist, als Depotdünger verwendet werden, wobei Mikroorganismen diese Schwarzlauge in für Pflanzen verfügbare Stickstoffverbindungen umwandeln können.

Eine besonders bevorzugte Weiterbildung der Erfindung sieht vor, dass die pulverförmigen Feststoffe organische und/oder anorganische Düngekomponenten, insbesondere stickstoffhaltige Substanzen, Mineralstoffe, Bindemittel, Bentonit, Leonardit, Spurenelemente, sonstige Pflanzennährstoffe, Pflanzenschutzmittel, Bodenverbesserer, Mikroorganismen oder eine Kombination dieser umfassen. Die Zugabe von organischen und/oder anorganischen Düngekomponenten als pulverförmige Feststoffe zu der erfindungsgemäßen Schwarzlauge kann das Pflanzenwachstum in günstiger Weise beeinflussen. Als Düngekomponenten sind hierbei insbesondere solche Stoffe zu verstehen, welche die jeweilige Pflanze bei der Generierung von Biomasse strukturell benötigt, Stoffe die das Pflanzenwachstum beschleunigen und/oder begünstigen sowie Stoffe, die das Pflanzenwachstum insofern fördern, als sie Pflanzen von äußeren Einflüssen, welche sich auf die Gesundheit oder das Wachstum der Pflanzen schädlich, hemmend oder verlangsamend auswirken können, abschirmen. Solche Stoffe können insbesondere Fungizide, Herbizide, Pestizide sowie jede andere dem Fachmann geläufige Substanz oder Zusammensetzung zum Schutz von Pflanzen vor äußeren Einflüssen umfassen. Äußere Einflüsse umfassen auch solche Einflüsse, welche nicht nur auf der Oberfläche, sondern auch im Inneren der Pflanze wirken können, wie beispielsweise Krankheiten, Parasiten oder Pflanzengifte. Weiterhin sind erfindungsgemäß als Düngekomponenten Substanzen oder Zusammensetzungen zu verstehen, welche den Boden in einer für das Pflanzenwachstum zuträglichen Art und Weise verändern. Der Begriff der organischen und/oder anorganischen Düngekomponenten ist in der für den Fachmann geläufigen Art und Weise zu verstehen. Weiterhin umfasst der Begriff der organischen Düngekomponenten auch biologische Düngekomponenten, etwa organische Dünger und auch Mikroorganismen. Solche Mikroorganismen können Abbau- und Zersetzungsprozesse der Düngekomponenten steuern und so für eine bedarfsgerechte Nährstofffreisetzung sorgen.

Eine besonders zweckmäßige Weiterbildung der Erfindung kann dadurch erreicht werden, dass die Schwarzlauge und die Feststoffe einem Extruder zugeführt und darin vermengt werden und am Austritt des Extruders zu Strängen ausextrudiert werden, welche zu den Granulatkörnern abgelängt werden. Durch Extrusion kann eine gezielte plastische Formbarkeit und Fließfähigkeit der Granulatmasse erreicht werden, sowie ein besonders formstabiles Granulat nach der Ablängung der ausextrudierten Stränge erzeugt werden. Zum Ablängen ist vorzugsweise eine Schneideeinrichtung, insbesondere ein rotierendes Messer, an der Außenseite des plattenförmigen Formwerkzeugs vorgesehen. Hierbei ist durch den Extruder gleichzeitig die erfindungsgemäße Mischvorrichtung verwirklicht. Durch Druck sowie Zuführung von Flüssigkeit lässt sich die gewünschte, vorzugsweise pastöse Konsistenz der Mischung einstellen. Insbesondere kann ein Mehrwellen-Extruder im gleich- oder gegenlaufenden Betrieb, eingesetzt werden. Dies sorgt für eine gute Vermischung und Vorbehandlung der Extrusionsmasse. Der Einsatz eines Extruders kann es ermöglichen, dass die Korngrößen des geformten Granulats in einem gleichen, zumindest jedoch in einem ähnlichen Bereich liegen. Alternativ kann eine vorteilhafte Ausgestaltung der Erfindung darin bestehen, dass das Granulat durch Agglomeration erzeugt wird. Hierbei kann mittels Kapillarkräften, Bindemittel, Molekularanziehung sowie sich ineinander verhakende Bindungen bei zerklüfteter oder faseriger Oberfläche, eine Kornvergrößerung durch Bewegung des zu agglomerierenden Materials erreicht werden.

Eine bevorzugte Weiterbildung der Erfindung kann darin bestehen, dass die Schwarzlauge aus lignocellulose-haltiger Biomasse, insbesondere aus Einjahrespflanzen, vorzugsweise aus Getreidestroh, gebildet wird und mindestens teilweise niedermolekulares Lignin aufweist. Lignin ist ein wesentlicher Bestandteil der aus Lignocellulose gebildeten Schwarzlauge. Beim Aufschluss dieser Biomasse kann das Bio-Polymer-Lignin in kleinere Ligninbestandteile beziehungsweise niedermolekulare Lignin-Einheiten aufgespalten werden. Man kann in diesem Zusammenhang auch von einem abgebauten oder reaktiven Lignin sprechen. Lignocellulose ist sowohl in holzhaltigen wie auch in holzfreien Pflanzen enthalten. Besonders bevorzugt ist es nach einer Weiterbildung der Erfindung, dass Schwarzlauge aus Weizenstroh gebildet wird. Es kann jedoch auch jedes andere Pflanzenmaterial mit einem Anteil an Lignocellulose verwendet werden.

Eine besonders vorteilhafte Ausführung der Erfindung besteht darin, dass beim Bilden der Schwarzlauge enthaltene Ligninbestandteile zu einem überwiegenden Teil in monomere, dimere bis trimere Verbindungen zerlegt werden. Ein hoher Anteil an gebildeten monomeren, dimeren bis trimeren Verbindungen der Lignineinheiten der Schwarzlauge kann den Anteil an gebundenem Alkanolamin, insbesondere Monoethanolamin in der Schwarzlauge, vorteilhaft beeinflussen. Besonders bevorzugt ist ein Anteil von monomeren, dimeren bis trimeren Verbindungen der Ligninbestandteile von 20% bis 90%, vorzugsweise von 40% bis 60% des vorliegenden Lignins.

Eine Weiterbildung der Erfindung in besonders vorteilhafter Weise besteht darin, dass zum Bilden der Schwarzlauge die lignocellulose-haltige Biomasse mit mindestens einem Alkanolamin, insbesondere mit Monoethanolamin, aufgeschlossen wird. Alkanolamin, insbesondere Monoethanolamin, kann zu der Bildung von Schwarzlauge aus lignocellulose-haltiger Biomasse, insbesondere bei der Trennung der Cellulose- und Hemicelluloseanteile von den Lignin- und weiteren löslichen Schwarzlaugebestandteilen beitragen. Der schwer lösliche Rückstand kann zur Gewinnung von Zellstoff einer Weiterverarbeitung zugeführt werden. Um eine erhöhte Ausbeute an Schwarzlauge aus der lignocellulose-haltigen Biomasse zu ermöglichen, kann es von Vorteil sein, zusätzlich ein weiteres Lösungsmittel für Lignin-Bestandteile heranzuziehen. Vorzugsweise kann das weitere Lösungsmittel einen Wasseranteil aufweisen. Während der Extraktion der Schwarzlauge aus der lignocellulose-haltigen Biomasse kann es von Vorteil sein, dass die Reaktionstemperatur oberhalb der Raumtemperatur, jedoch unterhalb der Zersetzungstemperatur von eingesetztem Alkanolamin liegt. Eine erhöhte Reaktionstemperatur kann während der Gewinnung der Schwarzlauge zu einer rascheren und umfassenderen Lösung der Lignin-Bestandteile aus der lignocellulose-haltigen Biomasse beitragen.

Eine bevorzugte Weiterbildung der Erfindung kann darin bestehen, dass dem Aufschluss der lignocellulose-haltigen Biomasse zur Verbesserung der Ausbeute, Reaktionszeit und/oder zur Herabsetzung der notwendigen Reaktionstemperatur weitere Hilfsstoffe zugeführt werden. Die Gegenwart von Hilfsstoffen, insbesondere von katalytisch wirkenden Hilfsstoffen, kann den Aufschluss der lignocellulose-haltigen Biomasse in vorteilhafter Weise beeinflussen. Aufschlussreaktionen an der Biomasse werden in Anwesenheit der Hilfsstoffe gefördert und Nebenreaktionen stark zurückgedrängt. Die katalytisch wirksamen Hilfsstoffe umfassen vorzugsweise katalytisch wirksame Chinone, insbesondere in Form von Naphthochinon, Anthrachinon, Anthron, Phenanthenchinon. Anthrachinon hat sich als katalytischer Hilfsstoff als besonders vorteilhaft erwiesen, aber auch Alkyl-substituierte Derivate hiervon, wie 2-Methyl-anthrachinon, 2-Ethyl-anthrachinon, 2,6-Dimethyl-anthrachinon, 2,7-Dimethyl-anthrachinon und dergleichen können sich in vorteilhafter Weise auf den Aufschluss der lignocellulose-haltigen Biomasse auswirken.

Besonders vorteilhaft ist es nach einer Weiterbildung der Erfindung, dass beim Bilden der Schwarzlauge Biopolymere, insbesondere Cellulose, erzeugt und aus der Schwarzlauge abgetrennt werden. Hierbei handelt es sich um schwerlösliche Biopolymere, welche vorzugsweise in der Papierherstellung verwendet werden.

Besonders bevorzugt ist es nach einer Weiterbildung der Erfindung, dass zum Reinigen der Schwarzlauge schwer lösliche Biopolymere durch Filtration, Zentrifugation, Sedimentation, Pressen oder Waschen abgetrennt werden. In Abhängigkeit von der Ausgestaltung des jeweiligen Separationsprozesses zwischen Schwarzlauge und schwer löslichen Lignocellulose-Bestandteilen kann es notwendig sein, weitere Schritte zum Reinigen der Schwarzlauge von schwer löslichen Bestandteilen, insbesondere Cellulose- und Hemicellulosebestandteilen durchzuführen. Hierbei kann die vergleichsweise hohe Löslichkeit von Schwarzlauge in geeigneten Lösemitteln vorteilhaft beim Abtrennen von schwer löslichen Bestandteilen ausgenutzt werden.

Eine besonders bevorzugte Ausführung der Erfindung besteht darin, dass das Düngemittel Granulatkörner umfasst, welche aus einer Mischung von Schwarzlauge und pulverförmigen Feststoffen gebildet sind. Hierbei ist es besonders bevorzugt, dass die Schwarzlauge stickstoffhaltig ist. Die ausextrudierte pastöse Mischung umfassend Schwarzlauge und pulverförmige Feststoffe kann nach dem Formen der Granulatkörner durch ein geeignetes, dem Fachmann geläufiges Verfahren von vorhandenen Lösemitteln befreit werden, um formstabile Düngemittelgranulatkörner zu erzeugen. Dies kann insbesondere durch Hitze, Unterdruck, ein Bindemittel für Lösemittel oder eine Kombination hiervon geschehen. Da die Schwarzlauge in den Granulatkörnern insbesondere gebundenes Alkanolamin, vorzugsweise Monoethanolamin enthält, führt der Trocknungsprozess der ausextrudierten pastösen Mischung nicht zu einem signifikanten Verlust an stickstoffhaltigen Bestandteilen des Granulats, welche dem Einsatz als Düngemittel zugeführt werden können.

Besonders bevorzugt ist es nach einer Weiterbildung der Erfindung, dass die Granulatkörner gebundenes Alkanolamin, vorzugsweise Monoethanolamin, vorzugsweise mit einem Anteil von 1 % bis 40% gebundenes Alkanolamin, insbesondere Monoethanolamin enthalten. Um durch das erfindungsgemäße Granulat eine ausreichende Versorgung mit einer für Pflanzen verfügbaren, stickstoffhaltigen Verbindung zu gewährleisten, ist es vorteilhaft, einen hohen Anteil an gebundenem Alkanolamin, insbesondere Monoethanolamin in der verarbeiteten Schwarzlauge zur Verfügung zu stellen. In Abhängigkeit von der Ausgestaltung des Herstellungsprozesses der Schwarzlauge kann dieser Anteil an gebundenem Alkanolamin Schwankungen unterliegen. Hierbei kann die Aufnahme an Alkanolamin durch die Schwarzlauge zu gebundenem Alkanolamin, insbesondere gebundenem Monoethanolamin von dem Anteil an gebildeten niedermolekularen Verbindungen, insbesondere den Monomeren, Dimeren bis Trimeren Verbindungen der Lignineinheiten in der Schwarzlauge abhängen.

## Patentansprüche

1. Verfahren zum Herstellen eines stickstoffhaltigen Düngemittels, bei welchem
- lignozellulose-haltige Biomasse aus Einjahrespflanzen mit Alkanolamin aufgeschlossen und dabei eine Schwarzlauge gebildet wird,
- aus der flüssigen Schwarzlauge mindestens freies Alkanolamin als ein Schadstoff entfernt wird, wobei gebundenes Alkanolamin in der Schwarzlauge verbleibt, und
- die Schwarzlauge zum Bilden des Düngemittels verwendet wird,
**dadurch gekennzeichnet,**
- **dass** nach dem Entfernen des freien Alkanolamins die Schwarzlauge mit dem gebundenen Alkanolamin auf Raumtemperatur abgekühlt und mit Wasser vermengt wird, wobei ein definierter fließfähiger Zustand der Schwarzlauge eingestellt wird,
- **dass** die fließfähige Schwarzlauge einem Mehrwellen-Extruder als Mischvorrichtung zugeführt und in dem Mehrwellen-Extruder mit pulverförmigen Feststoffen, welche phosphor- und kaliumhaltige Substanzen als Düngerkomponenten umfassen, zu einer pastösen Düngemittel-Mischung vermengt wird, und
- **dass** die pastöse Düngemittel-Mischung am Austritt des Mehrwellen-Extruders zu Strängen ausextrudiert wird, welche zu Düngemittel-Granulatkörnern geformt werden.

2. Verfahren nach Anspruch 1,
**dadurch gekennzeichnet,**
**dass** als Schadstoff Alkanolamin mit 1 bis 4 Kohlenstoffatomen, vorzugsweise Monoethanolamin, Monopropanolamin, Monobutanolamin und/oder Diglycolamin; entfernt wird.

3. Verfahren nach Anspruch 1 oder 2,
**dadurch gekennzeichnet,**
**dass** freies Alkanolamin, vorzugsweise Monoethanolamin, durch Fällung mit anschließender Filtration, Zentrifugation oder Pressen aus der Schwarzlauge entfernt wird.

4. Verfahren nach einem der Ansprüche 1 bis 3,
**dadurch gekennzeichnet,**
**dass** die Schwarzlauge mit einem Anteil an Monoethanolamin als einem gebundenen Alkanolamin gebildet wird.

5. Verfahren nach einem der Ansprüche 1 bis 4,
**dadurch gekennzeichnet,**
**dass** die pulverförmigen Feststoffe organische und/oder anorganische Düngekomponenten, insbesondere stickstoffhaltige, Substanzen, Mineralstoffe, Bindemittel, Bentonit, Leonardit, Spurenelemente, sonstige Pflanzennährstoffe, Pflanzenschutzmittel, Bodenverbesserer, Mikroorganismen oder eine Kombination dieser umfassen.

6. Verfahren nach einem der Ansprüche 1 bis 5,
**dadurch gekennzeichnet,**
**dass** die Stränge am Austritt des Extruders zu den Granulatkörnern abgelängt werden.

7. Verfahren nach einem der Ansprüche 1 bis 6,
**dadurch gekennzeichnet,**
**dass** die Schwarzlauge aus Getreidestroh gebildet wird und mindestens teilweise niedermolekulares Lignin aufweist.

8. Verfahren nach Anspruch 7,
**dadurch gekennzeichnet,**
**dass** beim Bilden der Schwarzlauge enthaltene Ligninbestandteile zu einem überwiegenden Teil in monomere, dimere bis trimere Verbindungen zerlegt werden.

9. Verfahren nach einem der Ansprüche 1 bis 8,
**dadurch gekennzeichnet,**
**dass** zum Bilden der Schwarzlauge die lignozellulose-haltige Biomasse mit mindestens einem Alkanolamin aufgeschlossen wird, welches Monoethanolamin aufweist.

10. Verfahren nach einem der Ansprüche 1 bis 9,
**dadurch gekennzeichnet,**
**dass** dem Aufschluss der lignozellulose-haltigen Biomasse zur Verbesserung der Ausbeute, Reaktionszeit und/oder zur Herabsetzung der notwendigen Reaktionstemperatur weitere Hilfsstoffe zugeführt werden.

11. Verfahren nach einem der Ansprüche 1 bis 10,
**dadurch gekennzeichnet,**
**dass** beim Bilden der Schwarzlauge Biopolymere, insbesondere Zellulose, erzeugt und aus der Schwarzlauge abgetrennt werden.

12. Verfahren nach einem der Ansprüche 1 bis 11,
**dadurch gekennzeichnet,**
**dass** zum Reinigen der Schwarzlauge schwer lösliche Biopolymere durch Filtration, Zentrifugation, Sedimentation, Pressen oder Waschen abgetrennt werden.

## Claims

1. Method for producing a nitrogenous fertilizer, in which
- lignocellulose-containing biomass of annual plants is decomposed by way of alkanolamine and a black liquor is formed thereby,
- from the liquid black liquor at least free alkanolamine is removed as a noxious substance, with bonded alkanolamine remaining in the black liquor, and
- the black liquor is used to form the fertilizer,
**characterized in that**
- after removal of the free alkanolamine the black liquor with the bonded alkanolamine is cooled to room temperature and mixed with water, with a defined flowable state of the black liquor being set,
- the flowable black liquor is supplied to a multi-screw extruder as mixing device and mixed in the multi-screw extruder with powdery solids, which comprise phosphoric and potassic substances as fertilizer components, to form a pasty fertilizer mixture and
- at the exit of the multi-screw extruder the pasty fertilizer mixture is extruded into strands which are shaped into fertilizer granules.

2. Method according to claim 1,
**characterized in that**
as noxious substance alkanolamine having 1 to 4 carbon atoms, preferably monoethanolamine, monopropanolamine, monobutanolamine and/or diglycolamine, is removed.

3. Method according to claim 1 or 2,
**characterized in that**
free alkanolamine, preferably monoethanolamine, is removed from the black liquor through precipitation with subsequent filtration, centrifugation or pressing.

4. Method according to any one of claims 1 to 3,
**characterized in that**
the black liquor is formed with a proportion of monoethanolamine as a bonded alkanolamine.

5. Method according to any one of claims 1 to 4,
**characterized in that**
the powdery solids comprise organic and/or inorganic fertilizer components, in particular nitrogenous substances, minerals, binding agents, bentonite, leonardite, trace elements, other plant nutrients, plant protection agents, soil conditioners, microorganisms or a combination thereof.

6. Method according to any one of claims 1 to 5,
**characterized in that**
at the exit of the extruder the strands are cut to the granules.

7. Method according to any one of claims 1 to 6,
**characterized in that**
the black liquor is formed of cereal straw and has at least partially low-molecular lignin.

8. Method according to claim 7,
**characterized in that**
during the formation of the black liquor contained lignin constituents are broken down to a major part into monomeric, dimeric to trimeric compounds.

9. Method according to any one of claims 1 to 8,
**characterized in that**
to form the black liquor the lignocellulose-containing biomass is decomposed by way of at least one alkanolamine having monoethanolamine.

10. Method according to any one of claims 1 to 9,
**characterized in that**
further auxiliary agents are supplied to the decomposition of the lignocellulose-containing biomass to improve the yield, reaction time and/or to reduce the required reaction temperature.

11. Method according to any one of claims 1 to 10,
**characterized in that**
during the formation of the black liquor biopolymers, in particular cellulose, are produced and separated from the black liquor.

12. Method according to any one of claims 1 to 11,
**characterized in that**
to purify the black liquor biopolymers of low solubility are separated through filtration, centrifugation, sedimentation, pressing or washing.

## Revendications

1. Procédé de fabrication d'un fertilisant contenant de l'azote, dans lequel
- une biomasse contenant de la lignocellulose issue de plantes annuelles est transformée avec de l'alcanolamine et ce faisant,
une liqueur noire est formée,
- au moins une alcanolamine libre est éliminée, en tant que substance nocive, de la liqueur noire liquide, l'alcanolamine liée restant dans la liqueur noire, et
- la liqueur noire est utilisée pour former du fertilisant,
**caractérisé en ce que**
- après l'élimination de l'alcanolamine libre, la liqueur noire avec l'alcanolamine liée est refroidie à température ambiante et mélangée avec de l'eau, la liqueur noire étant alors dans un état apte à s'écouler défini ,
- la liqueur noire apte à s'écouler est acheminée à une extrudeuse à plusieurs vis en tant que dispositif de mélange et est mélangée dans l'extrudeuse à plusieurs vis avec des solides pulvérulents qui comprennent des substances contenant du phosphore et du potassium en tant que composants de fertilisant, en un mélange fertilisant pâteux, et
- le mélange fertilisant pâteux est extrudé à la sortie de l'extrudeuse à plusieurs vis en brins, lesquels sont formés en granulés de fertilisant.

2. Procédé selon la revendication 1,
**caractérisé en ce que**,
l'alcanolamine, en tant que substance nocive, avec 1 à 4 atomes de carbone, de préférence la mono-éthanolamine, la mono-propanolamine, la mono-butanolamine et/ou la diglycolamine, est éliminée.

3. Procédé selon la revendication 1 ou 2,
**caractérisé en ce que**
l'alcanolamine libre, de préférence la mono-éthanolamine, est éliminée de la liqueur noire par précipitation avec filtration, centrifugation ou compression consécutives.

4. Procédé selon l'une des revendications 1 à 3,
**caractérisé en ce que**
la liqueur noire est formée avec une proportion de mono-éthanolamine en tant qu'alcanolamine liée.

5. Procédé selon l'une des revendications 1 à 4,
**caractérisé en ce que**
les solides pulvérulents comprennent des composants de fertilisant organiques et/ou inorganiques, en particulier des substances, des minéraux, des liants, de la bentonite, de la léonardite, des oligo-éléments, d'autres substances nutritives des végétaux, des agents protecteurs des végétaux, des conditionneurs de sol, des micro-organismes, contenant de l'azote, ou une combinaison de ceux-ci.

6. Procédé selon l'une des revendications 1 à 5,
**caractérisé en ce que**
les brins sont coupés en longueur pour former des granulés à la sortie de l'extrudeuse.

7. Procédé selon l'une des revendications 1 à 6,
**caractérisé en ce que**,
la liqueur noire est formée à partir de paille de céréales et présente au moins en partie de la lignine de bas poids moléculaire.

8. Procédé selon la revendication 7,
**caractérisé en ce que**
des composants de lignine contenus lors de la formation de la liqueur noire sont décomposés pour une majeure partie en composés monomères, dimères à trimères.

9. Procédé selon l'une des revendications 1 à 8,
**caractérisé en ce que**
pour la formation de la liqueur noire, la biomasse contenant de la lignocellulose est transformée avec au moins une alcanolamine qui présente de la mono-éthanolamine.

10. Procédé selon l'une des revendications 1 à 9,
**caractérisé en ce que**
d'autres adjuvants sont acheminés à la transformation de la biomasse contenant de la lignocellulose pour l'amélioration du rendement, de la durée réactionnelle et/ou pour l'abaissement de la température réactionnelle nécessaire.

11. Procédé selon l'une des revendications 1 à 10,
**caractérisé en ce que**
lors de la formation de la liqueur noire, des biopolymères, en particulier de la cellulose, sont générés et sont séparés de la liqueur noire.

12. Procédé selon l'une des revendications 1 à 11,
**caractérisé en ce que**
pour la purification de la liqueur noire, des biopolymères peu solubles sont séparés par filtration, centrifugation, sédimentation, compression ou lavage.
